# EUROPEAN PATENT APPLICATION

(11) **EP 2 854 225 A1**
(43) Date of publication of application: **01.04.2015**
(21) Application number: 14180039.1
(22) Date of filing: 06.08.2014
(51) Int. Cl.: H01R 11/12, H01R 4/30, F16B 37/04

(54) **Lead wire connection structure and electronic device including the same**

(30) Priority: 27.09.2013 JP 2013201848
(71) Applicant: Omron Corporation, Kyoto-shi, Kyoto 600-8530 (JP)
(72) Inventor: Ishikawa, Yoshihisa, Kyoto-shi, Kyoto 600-8530 (JP); Miyasaka, Takeshi, Kyoto-shi, Kyoto 600-8530 (JP); Tsukanaka, Yohei, Kyoto-shi, Kyoto 600-8530 (JP)
(74) Representative: Kilian Kilian & Partner

(57) **Abstract**

A lead wire connection structure includes: a terminal including a terminal main body having a through hole, and a connection part extending from one end of the terminal main body; and a lead wire having one end connected to the connection part. Herein, a pair of elastic holding parts extending from both opposite side edges of the terminal main body holds both side surfaces of a nut. Moreover, an internal thread hole of the nut and the through hole are coaxially arranged. The lead wire connection structure is obtained at low manufacturing cost, that is, the lead wire connection structure is obtained in a short processing time at low material cost and manufacturing facility cost.

## Description

### CROSS-REFERENCE TO RELATED APPLICATION

This application is based on Japanese Patent Application No. 2013-201848 filed with the Japan Patent Office on September 27, 2013, the entire contents of which are incorporated herein by reference.

### FIELD

The disclosure relates to a lead wire connection structure, for example, a lead wire connection structure to be incorporated in a relay socket.

### BACKGROUND

Heretofore, various electric lead wire connection structures for a relay socket have been known. For example, JP 2000-100540 A discloses a method for manufacturing an electric component including a lead wire and an electrically conductive fitting. This method includes: forming a lead wire guide hole, which is a through hole, in the electrically conductive fitting in a thickness direction of the electrically conductive fitting; inserting the lead wire into the lead wire guide hole; applying an external pressure to the electrically conductive fitting to deform the lead wire guide hole; and connecting the lead wire and the electrically conductive fitting to each other.

In the method for manufacturing the electric component, the electrically conductive fitting is subjected to burring for forming an internal thread hole in a flange on the electrically conductive fitting.

However, the burring results in increase in manufacturing cost because of the following reasons. In order to perform the burring, a metal material for the electrically conductive fitting is required to be thick, so that material cost increases. Further, the burring requires a large and expensive manufacturing facility and a long processing time.

### SUMMARY

In view of the circumstances described above, an object of the disclosure is to provide a lead wire connection structure obtained at low manufacturing cost, that is, a lead wire connection structure obtained in a short processing time at low material cost and manufacturing facility cost.

In order to achieve the object, a lead wire connection structure according to the disclosure includes: a terminal including a terminal main body having a through hole, and a connection part extending from one end of the terminal main body; and a lead wire having one end connected to the connection part. Herein, a pair of elastic holding parts extending from both opposite side edges of the terminal main body holds both side surfaces of a nut. Moreover, an internal thread hole of the nut and the through hole are coaxially arranged.

According to the disclosure, the nut is held by the elastic holding parts of the terminal. Therefore, burring does not need to be performed, and the connection part of the terminal is easily bent while screw tightening torque is ensured. Hence, the lead wire connection structure is obtained at low manufacturing cost, that is, the lead wire connection structure is obtained in a short processing time at low material cost and manufacturing facility cost.

Moreover, in the case where the lead wire is incorporated in a housing of an electronic device, the nut and the terminal can be simultaneously positioned. Therefore, workability is improved in the lead wire connection structure.

In one embodiment of the disclosure, the nut may be formed into a quadrilateral shape as seen in a planar view.

According to the embodiment, the opposite side surfaces of the nut are parallel with each other. Therefore, the nut is easily held in the lead wire connection structure.

Particularly, when the nut is formed into a quadrilateral shape as seen in a planar view, a bottom surface of the terminal main body can be entirely supported with the nut, so that an area supported with the nut is widened. Therefore, since the terminal main body is not plastically deformed in a thickness direction, the terminal can be entirely formed of a thinner metal material, so that material cost can be saved.

In another embodiment of the disclosure, the connection part may be bent with respect to the terminal main body.

According to the embodiment, a floor area of the terminal and nut is reduced. Thus, a space for housing the terminal and the nut can be reduced and space efficiency can be improved in the lead wire connection structure.

In still another embodiment of the disclosure, the nut may have engagement grooves formed on the opposite side surfaces thereof, and the elastic holding parts of the terminal may be engaged with the engagement grooves.

According to the embodiment, the elastic holding parts are engaged with the engagement grooves, so that positioning work is facilitated. Thus, high positioning accuracy is attained and the nut is less prone to drop off in the lead wire connection structure.

In yet another embodiment of the disclosure, the engagement grooves may be formed to cut through the side surfaces of the nut.

According to the embodiment, the nut is easily manufactured, and the side surfaces of the nut can be entirely held by the elastic holding parts. Therefore, the nut is less prone to drop off in the lead wire connection structure.

In yet another embodiment of the disclosure, the elastic holding parts may pinch the side surfaces of the nut to hold the nut.

According to the embodiment, the elastic holding parts pinch the entire side surfaces of the nut to hold the nut. Therefore, the nut is still less prone to drop off in the lead wire connection structure.

In yet another embodiment of the disclosure, the nut may have chamfered portions formed on at least a pair of edges of the opposite side surfaces thereof, the edges being opposite to each other with the internal thread hole interposed therebetween.

According to the embodiment, the elastic holding parts of the terminal are easily attached to the nut. Therefore, assembling workability is improved.

In yet another embodiment of the disclosure, the nut may have an annular chamfered portion formed along an opening edge of the internal thread hole thereof, and the terminal main body may have a through hole having a diameter which is equal to or more than an outer peripheral diameter of the annular chamfered portion.

According to the embodiment, even when a screw to be screwed into the internal thread hole is misaligned to some extent, the screw is guided by the annular chamfered portion and is easily screwed into the internal thread hole.

Therefore, the assembling workability can be improved.

In yet another embodiment of the disclosure, the chamfered portions and the annular chamfered portion may be symmetrically formed on top and bottom surfaces of the nut.

According to the embodiment, the nut is easily aligned in the assembling work. Therefore, the assembling workability is further improved.

An electronic device according to the disclosure includes a cover, a base, and the lead wire connection structure described above. Herein, the lead wire connection structure is housed and disposed in a space formed by the cover and the base.

According to the disclosure, since the nut is held by the elastic holding parts of the terminal, burring does not need to be performed. Hence, the electronic device is obtained at low manufacturing cost, that is, the electronic device is obtained in a short processing time at low material cost and manufacturing facility cost.

Moreover, in the case where the lead wire is incorporated in the housing of the electronic device, the nut and the terminal can be simultaneously positioned. Therefore, workability is improved in the electronic device.

In one embodiment of the disclosure, the terminal and the nut may be held by an inner surface of the cover and a support plate protruding from a top surface of the base.

According to the embodiment, the terminal and the nut are less prone to drop off in the electronic device.

### BRIEF DESCRIPTION OF THE DRAWINGS

Fig. 1A is a perspective view of a first embodiment in which a lead wire connection structure is applied to a relay socket, and illustrates a state that a relay is attached to the relay socket;
Fig. 1B is a perspective view of the first embodiment, and illustrates a state that the relay is detached from the relay socket;
Fig. 2 is an exploded perspective view of the relay socket illustrated in Fig. 1B;
Fig. 3 is an exploded perspective view of the relay socket illustrated in Fig. 1B, the relay socket seen from a different angle from that in Fig. 2;
Fig. 4A is a perspective view of partially enlarged components of the relay socket illustrated in Fig. 2;
Fig. 4B is an exploded perspective view of the partially enlarged components illustrated in Fig. 4A;
Fig. 5A is a plan view of the relay socket illustrated in Fig. 1B;
Fig. 5B is a section view taken along line V-V in Fig. 5A;
Fig. 6 is a perspective view of a partially enlarged section of the relay illustrated in Figs. 1A and 1B;
Fig. 7 is a perspective view of the partially enlarged section seen from a different angle from that in Fig. 6;
Fig. 8 is a perspective view of partially enlarged components for illustrating an assembling method;
Fig. 9A is an exploded perspective view of enlarged main components in a second embodiment;
Fig. 9B is an exploded perspective view of enlarged main components in a third embodiment;
Fig. 10A is an exploded perspective view of enlarged main components in a fourth embodiment;
Fig. 10B is an exploded perspective view of enlarged main components in a fifth embodiment;
Fig. 11A is a perspective view of enlarged main components in a sixth embodiment;
Fig. 11B is an exploded perspective view of the enlarged main components in the sixth embodiment;
Fig. 12 is a perspective view of a partially enlarged section in a seventh embodiment;
Fig. 13 is a perspective view of the partially enlarged section in the seventh embodiment, the partially enlarged section seen from a different angle from that in Fig. 12;
Fig. 14A is a perspective view of a second application example in which the lead wire connection structure is applied to a relay socket, and illustrates a state that a relay is attached to the relay socket;
Fig. 14B is a perspective view of the second application example, and illustrates a state that the relay is detached from the relay socket;
Fig. 15A is a plan view of the relay socket illustrated in Fig. 14B;
Fig. 15B is a section view taken along line XV-XV in Fig. 15A;
Fig. 16A is a perspective view of a third application example in which the lead wire connection structure is applied to a relay socket, and illustrates a state that a relay is attached to the relay socket;
Fig. 16B is a perspective view of the third application example, and illustrates a state that the relay is detached from the relay socket;
Fig. 17A is a plan view of the relay socket illustrated in Fig. 16B;
Fig. 17B is a section view taken along line XVII-XVII in Fig. 17A;
Fig. 18 is an exploded perspective view of the relay socket illustrated in Fig. 16B;
Fig. 19 is an exploded perspective view of the relay socket illustrated in Fig. 16B, the relay socket seen from a different angle from that in Fig. 18;
Fig. 20A is a perspective view of a fourth application example in which the lead wire connection structure is applied to a relay socket, and illustrates a state that a relay is attached to the relay socket;
Fig. 20B is a perspective view of the fourth application example, and illustrates a state that the relay is detached from the relay socket;
Fig. 21A is a plan view of the relay socket illustrated in Fig. 20B; and
Fig. 21B is a section view taken along line XXI-XXI in Fig. 21A.

### DETAILED DESCRIPTION

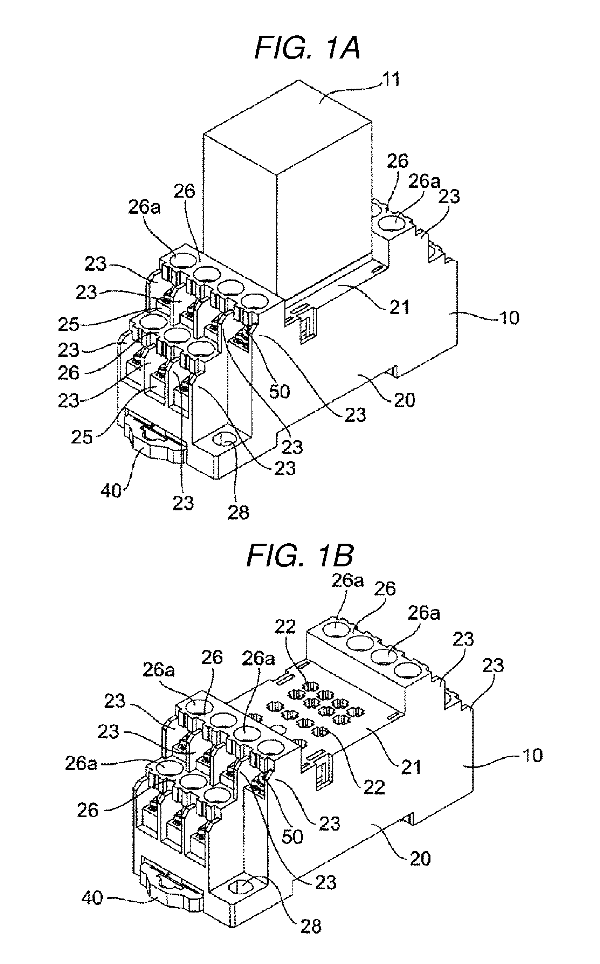

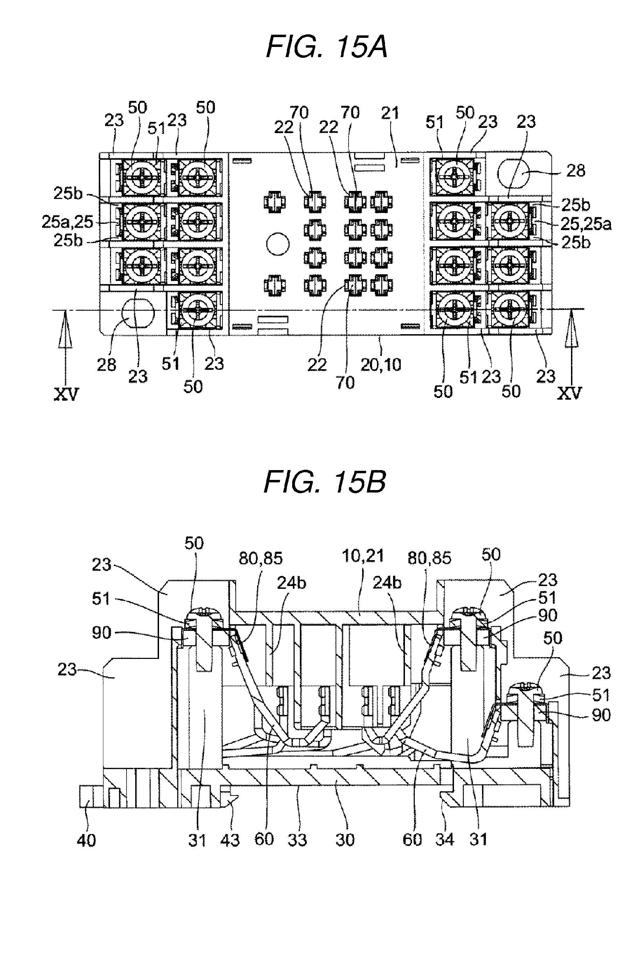

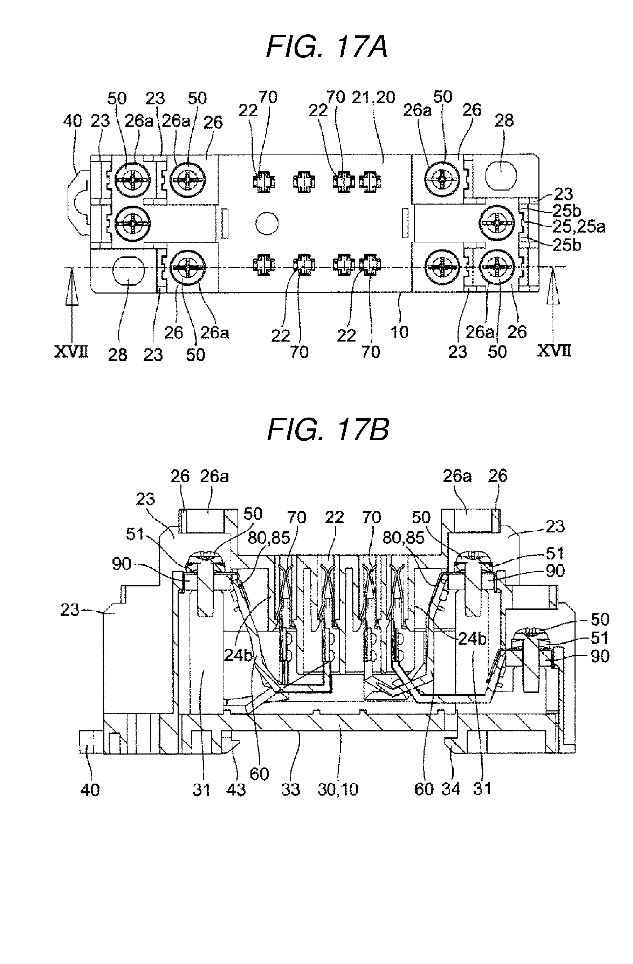

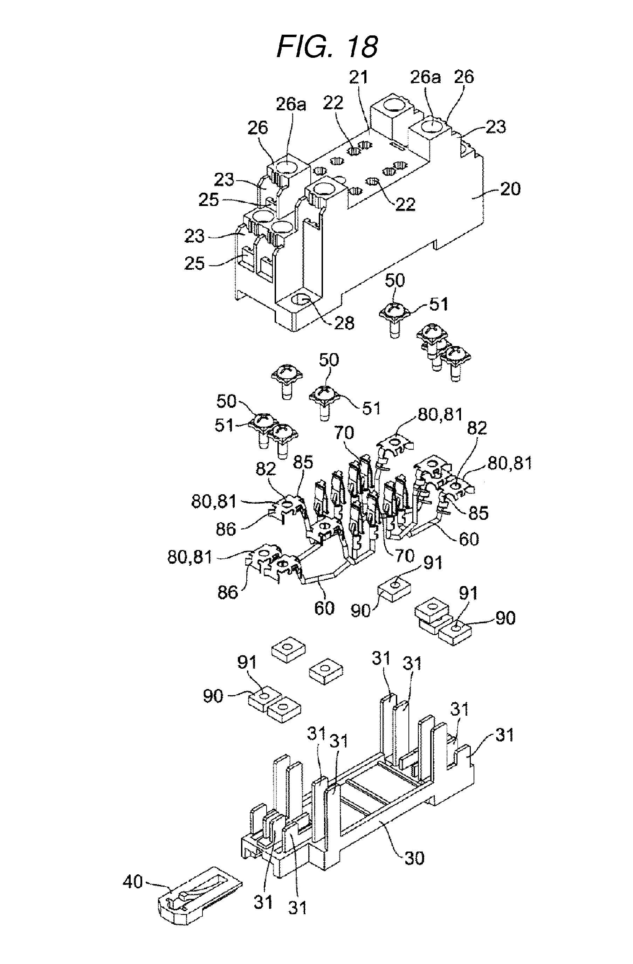

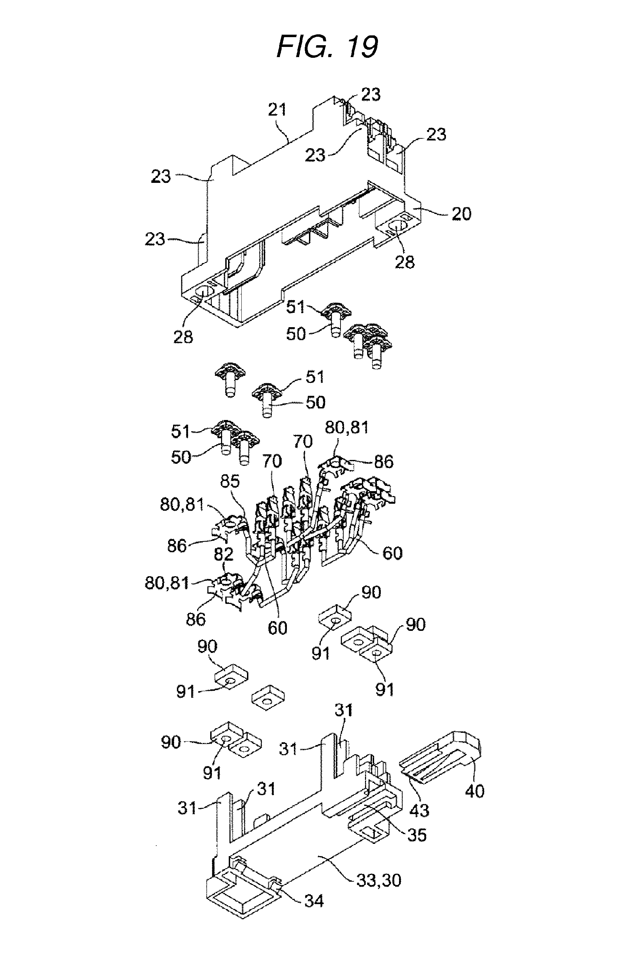

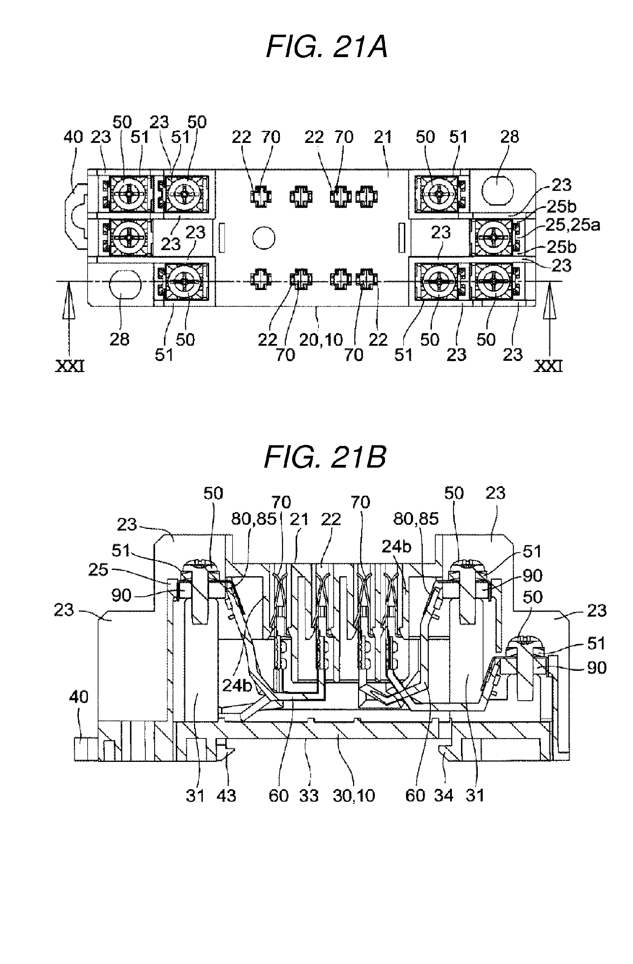

Description will be given of embodiments in which a lead wire connection structure according to the disclosure is applied to a relay socket 10 as illustrated in Figs. 1A to 21B attached herein.

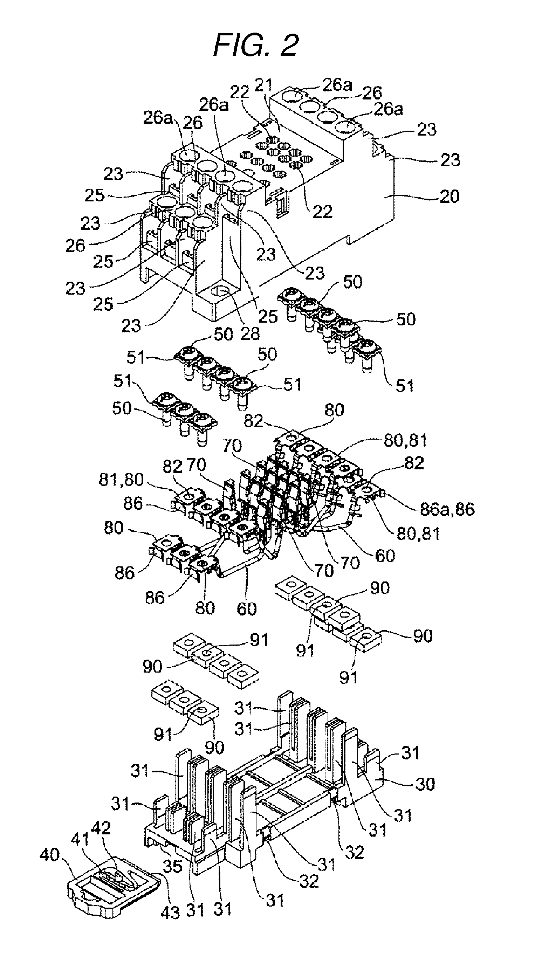

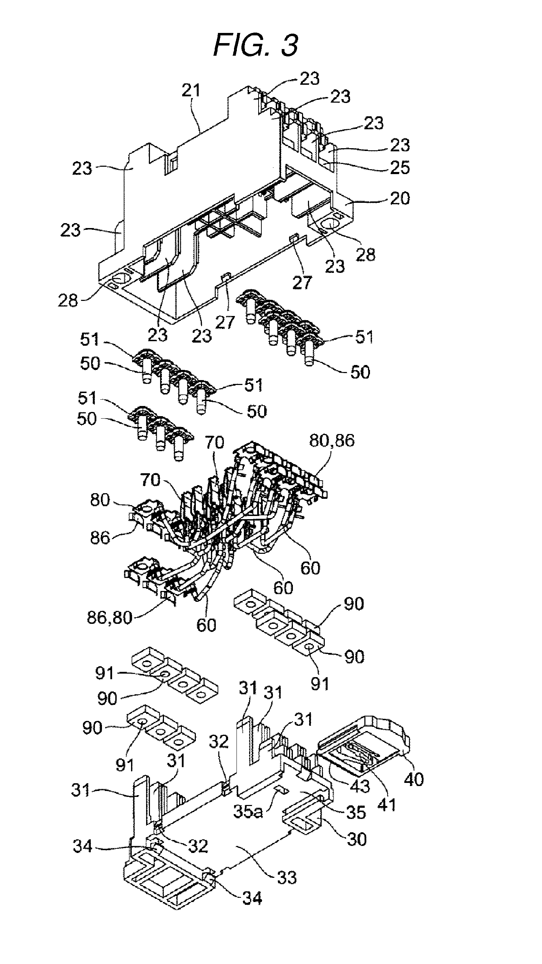

In the first embodiment, as illustrated in Figs. 1A and 1B, the relay socket 10 has a configuration that a relay 11 is attachable thereto. Moreover, as illustrated in Figs. 2 and 3, the relay socket 10 includes a cover 20, a base 30, and a plurality of lead wires 60 housed and wired in a space formed by the cover 20 and the base 30.

As illustrated in Fig. 2, the cover 20 is formed into a substantially box shape, and has a positioning recess 21 formed on a center of a top surface thereof. The positioning recess 21 has a plurality of insertion holes 22 formed in a bottom surface thereof and arranged in a lattice form. Each of the insertion holes 22 is formed into a substantially cross shape as seen in a planar view, and has a structure that a contact 70 (which will be described later) can be inserted from below.

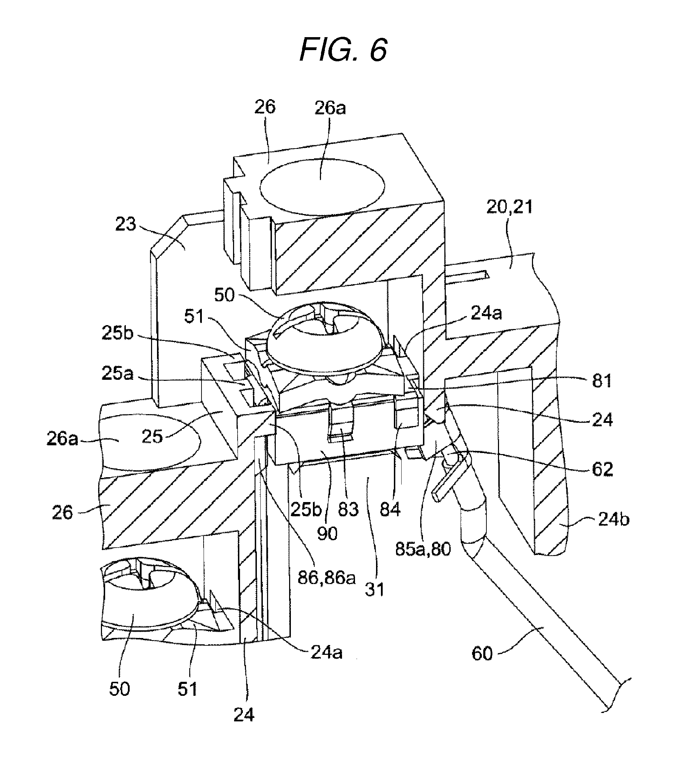

The cover 20 has a plurality of front-to-rear two-level insulation walls 23 formed on opposite side surfaces thereof with a predetermined pitch, and also has a rearward partition wall 24 and a forward partition wall 25 integrally formed in parallel with each other between the insulation walls 23 and 23 (see Fig. 6). Thus, a terminal 80 and a nut 90 (each of which will be described later) can be housed in a space formed by the insulation walls 23 and 23, the rearward partition wall 24 and the forward partition wall 25. The rearward partition wall 24 has a notch 24a formed on a lower end edge thereof, and the forward partition wall 25 has positioning projections 25a and 25b formed on an inward surface thereof such that the entire forward partition wall 25 has a substantially E shape as seen in a planar view (see Fig. 6). The insulation walls 23 and 23 have a finger protector 26 integrally formed on upper ends thereof, and the finger protector 26 has a work hole 26a which facilitates connecting work and improves safety. The cover 20 has an opening, and engagement latches 27 formed on inner edges of the opening so as to be engaged with the base 30 as will be described later (see Fig. 3). The cover 20 also has screw fixing holes 28 formed in diagonally opposite corners thereof such that the cover 20 is fastened to a different device with screws.

As illustrated in Fig. 2, the base 30 is formed into such a planar shape as to close the opening of the cover 20, and has a plurality of support plates 31 formed in parallel with one another with a predetermined pitch on a top surface thereof so as to protrude from the top surface. The support plates 31 are inserted along opposite surfaces of the insulation walls 23 and 23 of the cover 20, and are brought into contact with both lower edges of the nut 90 as will be described later, thereby positioning the nut 90. As illustrated in Fig. 3, the base 30 also has a pair of latch receivers 32 formed on opposite front and rear surfaces thereof, respectively, such that the engagement latches 27 of the cover 20 can be engaged with the latch receivers 32. The base 30 also has a groove 33 formed on a center of a bottom surface thereof. The groove 33 is formed for slidably attaching a guide rail (not illustrated) formed into a hat shape as seen in a sectional view. The base 30 also has a pair of engagement latches 34 formed on one side edge of the groove 33, and a mounting groove 35 formed on the other side edge of the groove 33. The mounting groove 35 is formed for attaching a rail guide member 40 (which will be described later), and is orthogonal to the groove 33. The mounting groove 35 has a locking hole 35a formed in a ceiling surface thereof.

As illustrated in Fig. 3, the rail guide member 40 is formed into such a frame shape as to be slidably attached to the mounting groove 35 formed on the bottom surface of the base 30, and has an S-shaped spring 41 integrally formed thereinside. When the rail guide member 40 is laterally attached to the mounting groove 35, a locking projection 42 (see Fig. 2) formed on the S-shaped spring 41 is locked by the locking hole 35a formed in the bottom surface of the base 30. Thus, the rail guide member 40 is prevented from being detached from the base 30. More specifically, the pair of engagement latches 34 formed on the bottom surface of the base 30 is engaged with one side edge of the guide rail (not illustrated) formed into a hat shape as seen in a sectional shape, and a tip end latch 43 of the rail guide member 40 is engaged with the other side edge of the guide rail. Thus, the base 30 is slidably attached to the guide rail.

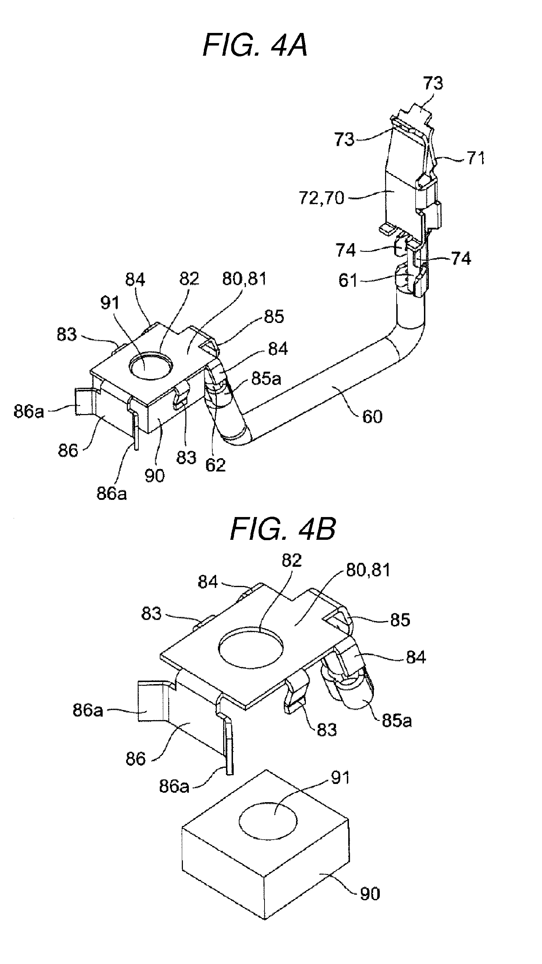

As illustrated in Figs. 4A and 4B, each of the lead wires 60 is easily bent, and has first and second ends 61 and 62. The contact 70 is secured by crimping to and electrically connected to a core wire at the first end 61, and the terminal 80 for holding the nut 90 is secured by crimping to and electrically connected to a core wire at the second end 62. If necessary, the contact 70 and the terminal 80 may be electrically connected by soldering to the core wires, respectively.

The contact 70 has the following structure. That is, a terminal (not illustrated) of the relay 11 is press fitted into between a pair of elastic contact pieces 71 and 72 each of which is formed in such a manner that an electrically conductive metal plate is stamped out by press working and then the stamped plate is bent. Thus, the contact 70 can be electrically connected to the relay 11. Each of the elastic contact pieces 71 and 72 has a guide tongue piece 73 which is formed by bending and raising a tip end of each elastic contact piece outward. Therefore, even in the state that the contact 70 is housed in the insertion hole 22 of the cover 20, the terminal of the relay 11 can be easily press fitted into the contact 70 through the guide tongue pieces 73 and 73. Moreover, the contact 70 is electrically connected to the first end 61 of the lead wire 60 in such a manner that a crimping latch 74 extending from the elastic contact piece 71 is crimped inward.

The terminal 80 is formed in such a manner that an electrically conductive metal plate is stamped out by press working, as in the contact 70. More specifically, the terminal 80 has a terminal main body 81 formed into a quadrilateral shape as seen in a planar view, a through hole 82 formed in the terminal main body 81, and a pair of elastic holding parts 83 extending from centers of both opposite side edges of the terminal main body 81. The elastic holding parts 83 are bent twice to hold the nut 90 as will be described later. In order to prevent misalignment of the temporarily held nut 90, the terminal 80 also has positioning tongue pieces 84 formed to extend from the side edges of the terminal main body 81 and bent at an obtuse angle.

The terminal 80 also has a connection part 85 extending from one of sides thereof other than the sides where elastic holding parts 83 are formed, and an elastic press tongue piece 86 extending from the remaining side thereof. The elastic press tongue piece 86 is formed into a substantially T shape. The connection part 85 is formed of a thin metal plate, and therefore is easily bent. Particularly, the connection part 85 is bent at an obtuse angle with respect to the terminal main body 81, so that a space for housing the terminal 80 is reduced. Moreover, the connection part 85 has two sets of crimping latches 85a protruding from both side edges thereof. When the crimping latches 85a are crimped inward, the terminal 80 is electrically connected to the second end 62 of the lead wire 60. On the other hand, the elastic press tongue piece 86 is bent at a substantially right angle with respect to the terminal main body 81, and both side edges of the elastic press tongue piece 86 are bent and raised. Thus, locking latches 86a are formed.

The nut 90 is substantially equal in planar shape to the terminal main body 81, and is slightly smaller in size than the terminal main body 81. Moreover, the nut 90 has an internal thread hole 91 formed in a center thereof. The nut 90 is press fitted into between the elastic holding parts 83 and 83 of the terminal 80 connected to the lead wire 60. Thus, the nut 90 is held by the terminal 80. Herein, the shapes of the terminal main body 81, through hole 82 and elastic holding parts 83 and 83 are set such that the through hole 82 of the terminal main body 81 and the internal thread hole 91 of the nut 90 can be coaxially arranged. Since the terminal main body 81 and the nut 90 are substantially equal in planar shape to each other, the nut 90 supports the entire bottom surface of the terminal main body 81 even when the terminal main body 81 of the terminal 80 is formed of a thin metal plate. Therefore, even when a screw 50 (which will be described later) is screwed into the internal thread hole 91 of the nut 90, the terminal main body 81 can be prevented from being plastically deformed and predetermined tightening torque can be ensured.

Moreover, the positioning tongue pieces 84 are brought into contact with opposite outer side corners of the nut 90, so that the temporarily held nut 90 can be prevented from being misaligned.

Herein, the shape of the nut 90 is not limited to a quadrilateral shape as seen in a planar shape, but may be, for example, a right hexagonal shape as seen in a planar view.

Next, description will be given of a method for assembling the constituent components described above.

First, the contact 70 and the terminal 80 are connected by crimping to the first end 61 and the second end 62 of the lead wire 60, respectively, and the nut 90 is held by the elastic holding parts 83 and 83 of the terminal 80. Then, the rail guide member 40 is slid into and engaged with the mounting groove 35 of the base 30. Moreover, the locking projection 42 of the rail guide member 40 is locked by the locking hole 35a of the base 30 such that the rail guide member 40 is prevented from being detached from the base 30.

On the other hand, the cover 20 is positioned with the opening thereof directed upward. Then, the inverted screw 50 having a washer 51 attached thereto is inserted into the space formed by the insulation walls 23 and 23, the rearward partition wall 24 and the forward partition wall 25. Herein, a head of the screw 50 is fitted into the work hole 26a of the finger protector 26, and the washer 51 is locked by an opening edge of the work hole 26a, so that the screw 50 is positioned. Therefore, the assembling work is facilitated.

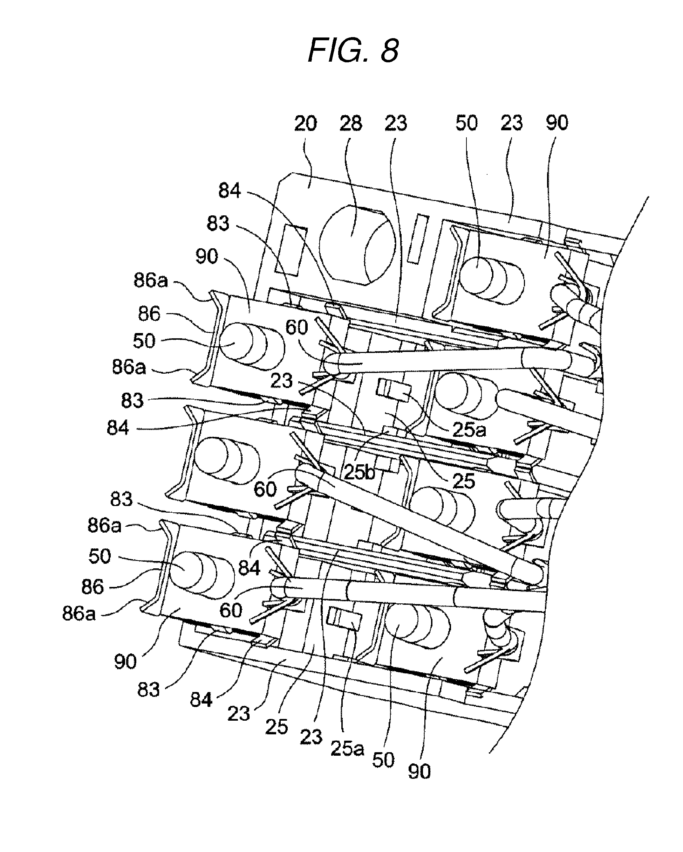

As illustrated in Fig. 8, next, the terminal 80 and the nut 90 each connected to the lead wire 60 are temporarily fixed in the space formed by the insulation walls 23 and 23, the rearward partition wall 24 and the forward partition wall 25. Thus, the connection part 85 of the terminal 80 is engaged with the notch 24a of the rearward partition wall 24, and the inward surface of the nut 90 is brought into contact with the rearward partition wall 24, so that the nut 90 is positioned. On the other hand, both side surfaces of the nut 90 are positioned by the insulation walls 23 and 23 through the use of the elastic holding parts 83 and the positioning tongue pieces 84. Moreover, a center of the elastic press tongue piece 86 of the terminal 80 is positioned by the positioning projection 25a of the forward partition wall 25, and an outward surface of the nut 90 is positioned by the positioning projection 25b of the forward partition wall 25. Herein, the locking latches 86a formed on both ends of the elastic press tongue piece 86 are locked by the positioning projections 25b and 25b, so that the terminal 80 and the nut 90 are prevented from dropping off. Further, a tip end of a shank of the screw 50 is fitted into the internal thread hole 91 of the nut 90. Therefore, the screw 50 can be prevented from dropping off and the assembling work is facilitated.

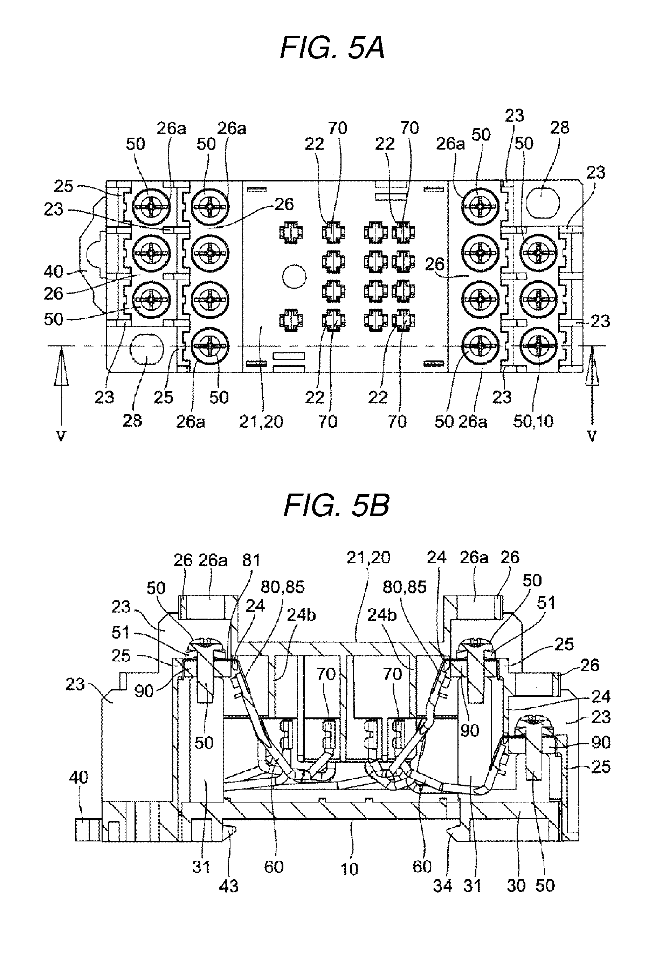

As illustrated in Fig. 5B, moreover, since the connection part 85 of the terminal 80 is bent at an obtuse angle with respect to the terminal main body 81, the space for housing the terminal 80 in the cover 20 can be minimized. Further, an internal partition wall 24b extends from the ceiling surface of the cover 20 at the rear side of the connection part 85. The internal partition wall 24b can ensure a high insulating property between the terminal 80 and the contact 70.

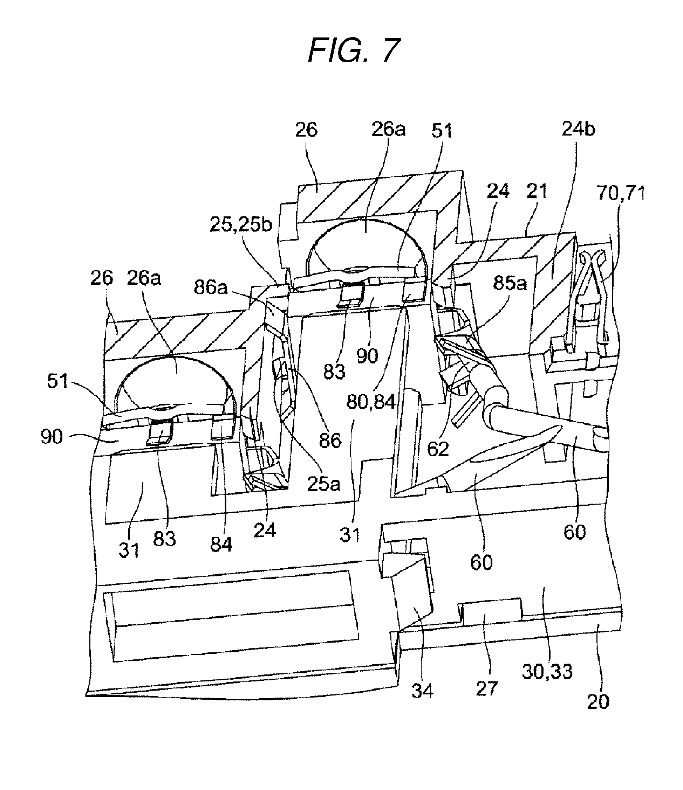

Then, the base 30 is fitted into the opening of the cover 20, and the engagement latch 27 of the cover 20 is engaged with the latch receiver 32 of the base 30 such that the cover 20 and the base 30 are prevented from being separated from each other. Thus, the terminal 80 and the nut 90 each of which is connected to the lead wire 60 are housed and disposed in the space formed by the cover 20 and the base 30. Moreover, both lower side edges of the nut 90 are pressed against the upper ends of the pair of support plates 31 of the base 30. Therefore, the connection part 85 of the terminal 80 is engaged with the notch 24a of the rearward partition wall 24 such that the terminal 80 is prevented from being detached from the cover 20 (see Fig. 6). Further, the locking latch 86a of the elastic press tongue piece 86 is locked by the positioning projection 25b of the forward partition wall 25 such that the terminal 80 is prevented from being detached from the cover 20 (see Fig. 7). That is, the terminal 80 and the nut 90 are held from above by the notch 24a of the rearward partition wall 24 and the positioning projections 25b of the forward partition wall 25 in the cover 20, and are also held from below by the support plates 31 protruding from the top surface of the base 30.

As illustrated in Fig. 8, particularly, the positioning tongue piece 84 of the terminal 80 is elastically deformed to come into press contact with the opposite surfaces of the insulation walls 23 and 23. In the cover 20, thus, the nut 90 is supported with the elastic holding parts 83 and 83 and the positioning tongue pieces 84 and 84. Therefore, the nut 90 can be supported without wobbling.

In the first embodiment, the elastic holding parts 83 and 83 and the positioning tongue pieces 84 and 84 are acted for supporting the terminal 80 and the nut 90, and are also acted for supporting the cover 20 and the nut 90. Alternatively, the elastic holding parts 83 and 83 may be acted for supporting the terminal 80 and the nut 90, and the positioning tongue pieces 84 and 84 may be acted for supporting the terminal 80 and the cover 20.

Next, the screw 50 is screwed into the internal thread hole 91 of the nut 90 through the work hole 26a of the cover 20. Thus, the assembling work is finished.

According to the first embodiment, since the lead wire 60 is easily bent, the assembling work is facilitated.

According to the first embodiment, moreover, the elastic holding parts 83 of the terminal 80 hold the nut 90 such that the nut 90 is prevented from dropping off. Therefore, the assembling work is further facilitated.

According to the first embodiment, further, the screw 50 can be accurately set at a predetermined position in such a manner that the head of the screw 50 is fitted into the work hole 26a of the finger protector 26. Therefore, the assembling work for the terminal 80 and the nut 90 is facilitated.

When the terminal 80 and the nut 90 are positioned in the cover 20, the tip end of the shank of the screw 50 is fitted into the internal thread hole 91 of the nut 90, so that the screw 50 can be prevented from dropping off. Therefore, the assembling work is further facilitated.

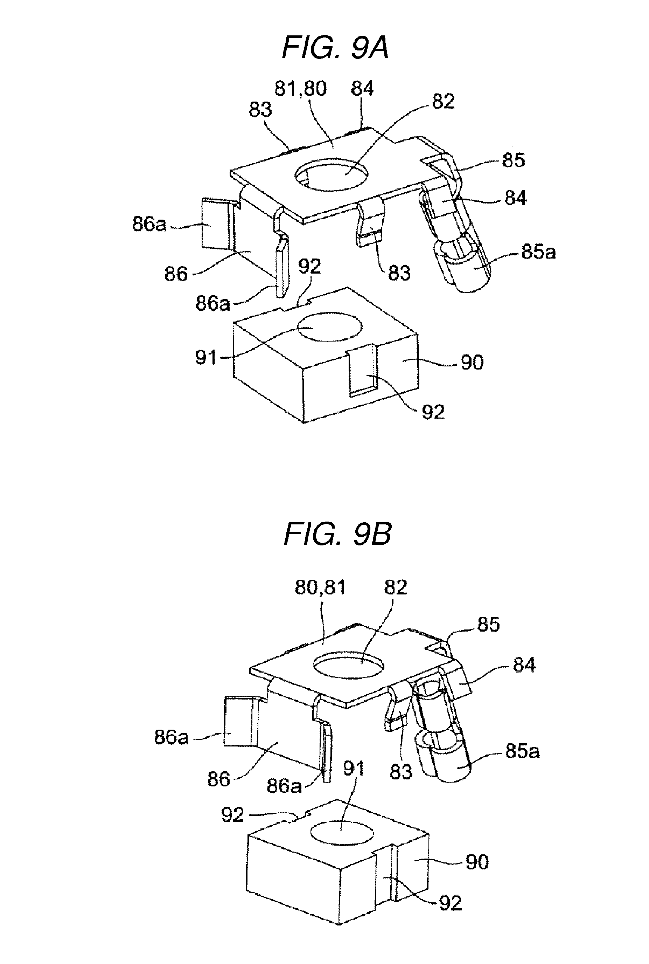

As illustrated in Fig. 9A, the second embodiment is almost equal to the first embodiment, but is different from the first embodiment in the following point. That is, engagement grooves 92 are formed on opposite outer side surfaces of the nut 90, and the terminal 80 holds the nut 90 in such a manner that the elastic holding parts 83 are engaged with the engagement grooves 92. For convenience of the description, the same constituent components are denoted with the same reference signs, and the detailed description thereof will not be given here.

According to the second embodiment, the elastic holding parts 83 are engaged with the engagement grooves 92. Therefore, the nut 90 can be accurately held and is less prone to drop off.

As illustrated in Fig. 9B, the third embodiment is almost equal to the first embodiment, but is different from the first embodiment in the following point. That is, engagement grooves 92 are formed on opposite outer side surfaces of the nut 90 so as to cut through the outer side surfaces, and the terminal 80 holds the nut 90 in such a manner that the elastic holding parts 83 are engaged with the engagement grooves 92. For convenience of the description, the same constituent components are denoted with the same reference signs, and the detailed description thereof will not be given here.

According to the third embodiment, the nut 90 can be accurately held and is less prone to drop off. Moreover, the nut 90 is easily manufactured.

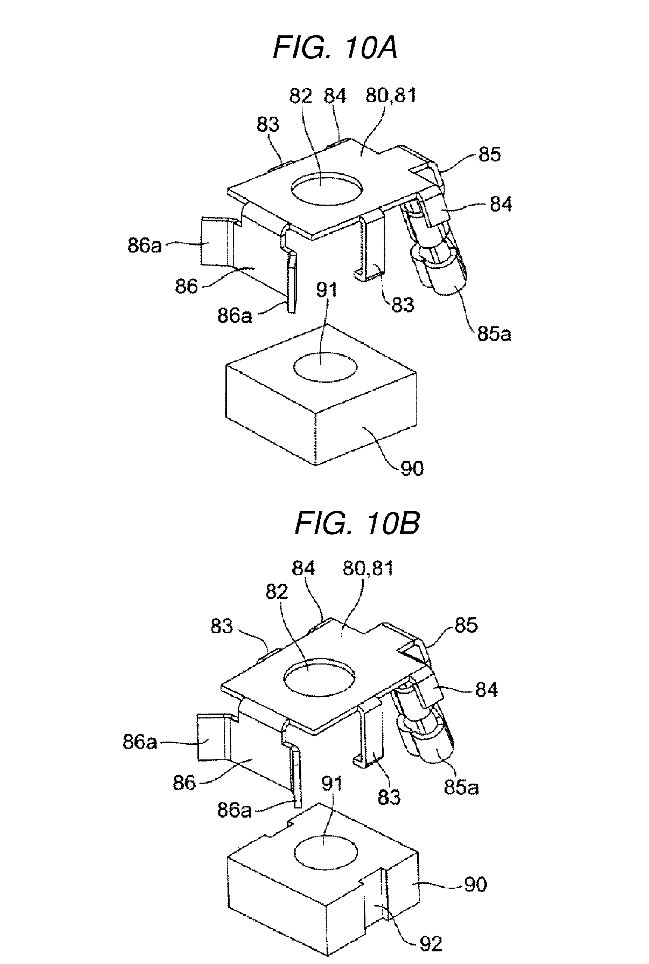

As illustrated in Fig. 10A, the fourth embodiment is almost equal to the first embodiment, but is different from the first embodiment in the following point. That is, the terminal 80 holds the nut 90 so as to pinch the entire side surfaces of the nut 90 with the elastic holding parts 83. For convenience of the description, the same constituent components are denoted with the same reference signs, and the detailed description thereof will not be given here.

According to the fourth embodiment, the nut 90 is pinched by the elastic holding parts 83, and therefore is still less prone to drop off.

As illustrated in Fig. 10B, the fifth embodiment is almost equal to the first embodiment, but is different from the first embodiment in the following point. That is, engagement grooves 92 are formed on opposite outer side surfaces of the nut 90 so as to cut through the outer side surfaces, and the elastic holding parts 83 of the terminal 80 are engaged with the engagement grooves 92 to pinch the nut 90. For convenience of the description, the same constituent components are denoted with the same reference signs, and the detailed description thereof will not be given here.

According to the fifth embodiment, the nut 90 can be more accurately and firmly held, and therefore is still less prone to drop off.

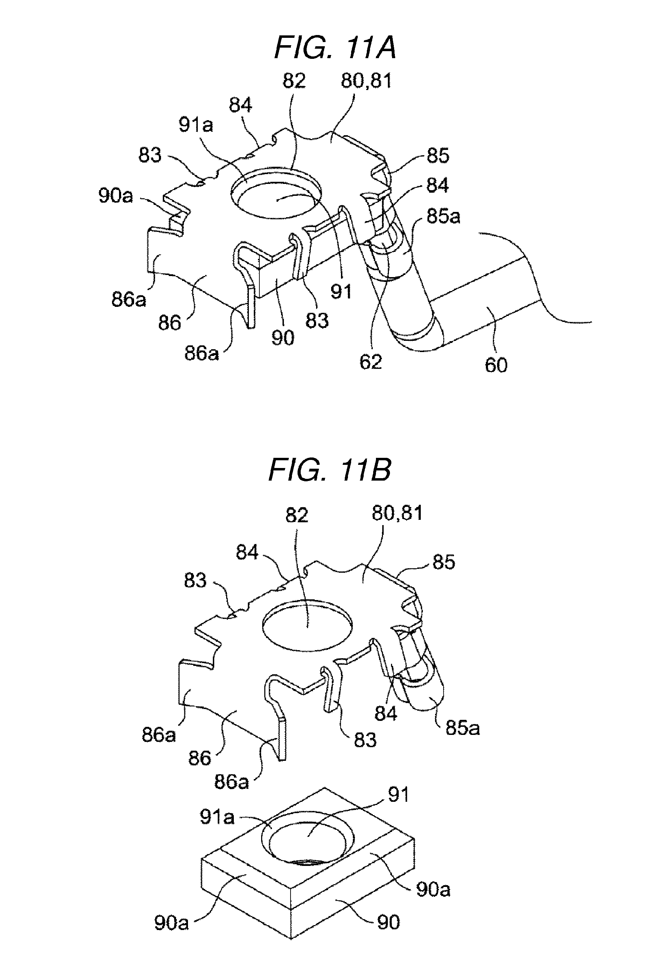

As illustrated in Figs. 11A and 11B, the sixth embodiment is almost equal to the first embodiment, but is different from the first embodiment in the following point. That is, chamfered portions 90a are formed on edges of the top surface of the nut 90. Moreover, an annular chamfered portion 91 a is formed on an opening edge of the internal thread hole 91 of the nut 90. On the other hand, a through hole 82 is formed in the terminal 80 so as to be larger in diameter than the opening edge of the internal thread hole 91 of the nut 90.

According to the sixth embodiment, the chamfered portions 90a allow the elastic holding parts 83 of the terminal 80 to be easily attached to the nut 90. Unlike the foregoing embodiments, therefore, the elastic holding parts 83 are not necessarily bent twice, but are merely bent once. That is, productivity is improved.

Moreover, the proximal end of the elastic holding part 83 and the proximal end of the positioning tongue piece 84 do not interfere with the outer peripheral edge of the nut 90. Therefore, the elastic holding part 83 and the positioning tongue piece 84 are easily bent. That is, the productivity is further improved.

Further, even when the screw 50 is misaligned, the annular chamfered portion 91 a guides the screw 50 to the internal thread hole 91. Therefore, the screw 50 can be screwed into the internal thread hole 91 with certainty.

Herein, each of the chamfered portion 90a and the annular chamfered portion 91 a is not limited to a C-plane, but may be an R-plane.

Moreover, the chamfered portions 90a and the annular chamfered portion 91 a may be symmetrically formed on the top and bottom surfaces of the nut 90. When the chamfered portions 90a and the annular chamfered portion 91 a are formed on the top and bottom surfaces of the nut 90 as described above, the nut 90 is easily aligned in the assembling work. Therefore, assembling workability is improved.

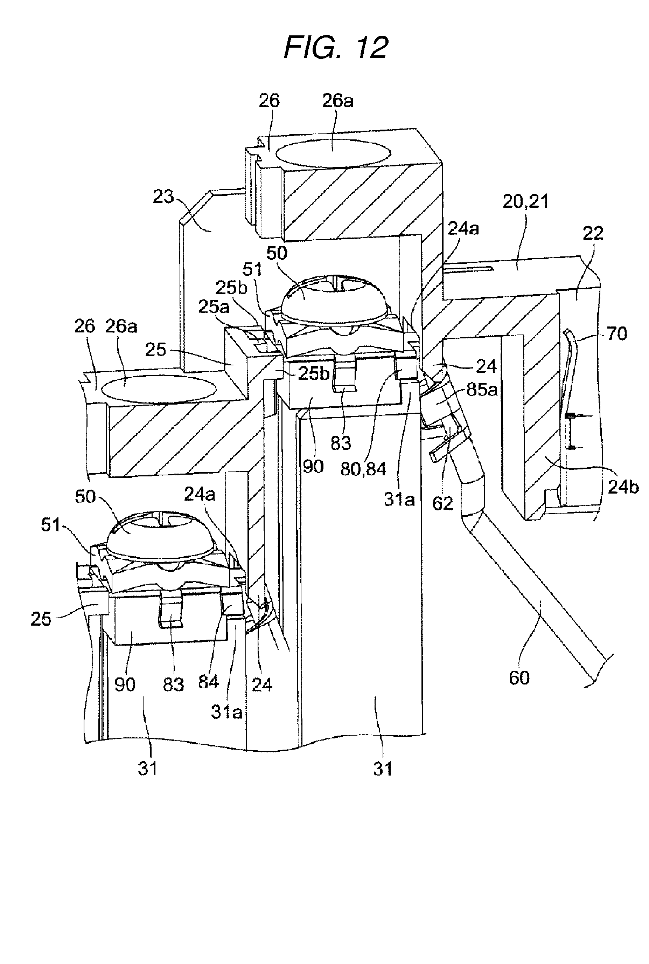

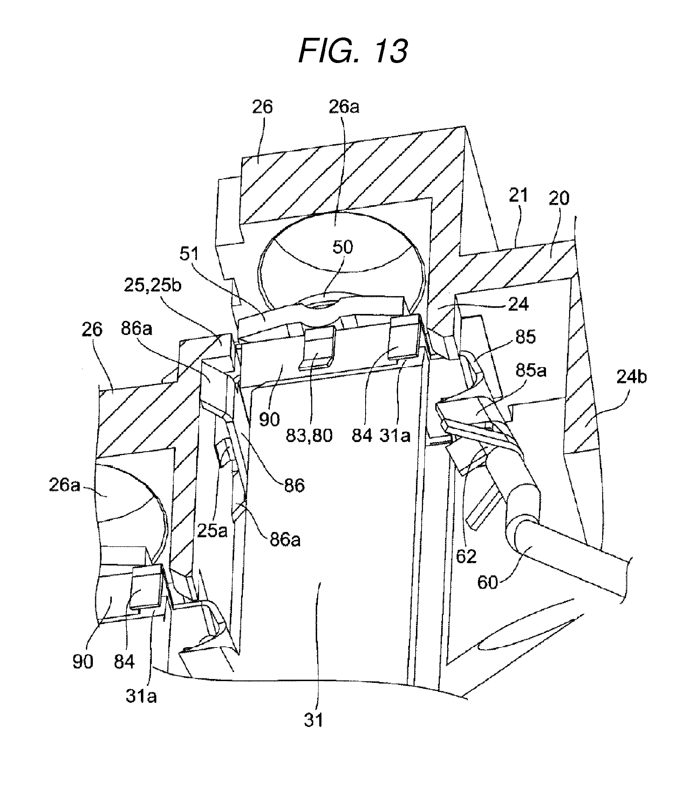

As illustrated in Figs. 12 and 13, the seventh embodiment is almost equal to the first embodiment, but is different from the first embodiment in the following point. That is, a positioning projection 31 a is formed on the upper end of the support plate 31 of the base 30 to position the inward surface of the nut 90. For convenience of the description, the same constituent components are denoted with the same reference signs, and the detailed description thereof will not be given here.

According to the seventh embodiment, since the nut 90 can be positioned by the positioning projection 31 a of the support plate 31, a tolerance upon incorporating the terminal 80 and the nut 90 in the cover 20 becomes large. Therefore, the relay socket 10 is obtained with improved assembling workability.

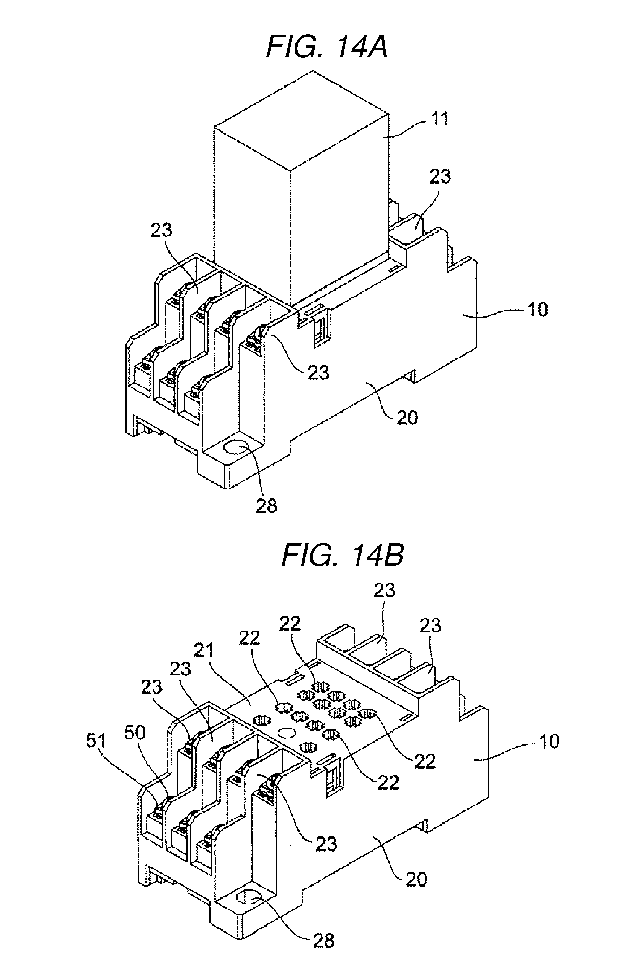

The relay socket 10 to be employed in the disclosure is not limited to the 14-pin relay socket 10 provided with the finger protector 26 having the work hole 26a in the first embodiment. As illustrated in Figs. 14A to 15B, for example, the lead wire connection structure may be applied to a 14-pin relay socket 10 provided with no finger protector (a second application example).

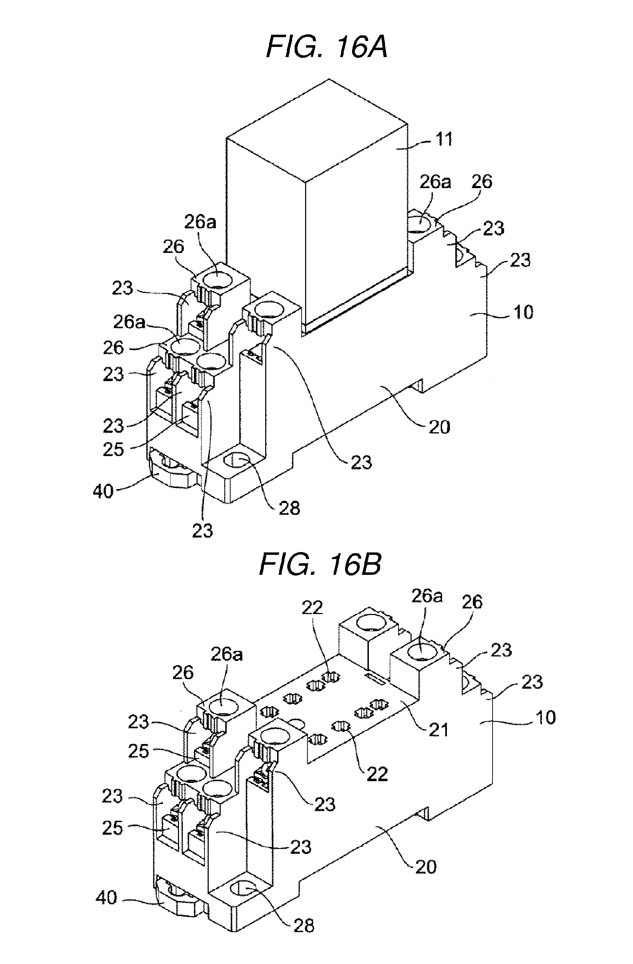

Moreover, the relay socket 10 to be employed in the disclosure is not limited to the 14-pin relay socket 10 provided with the finger protector 26 having the work hole 26a in the first embodiment. As illustrated in Figs. 16A to 19, the lead wire connection structure may be applied to an 8-pin relay socket 10 provided with a finger protector 26 (a third application example).

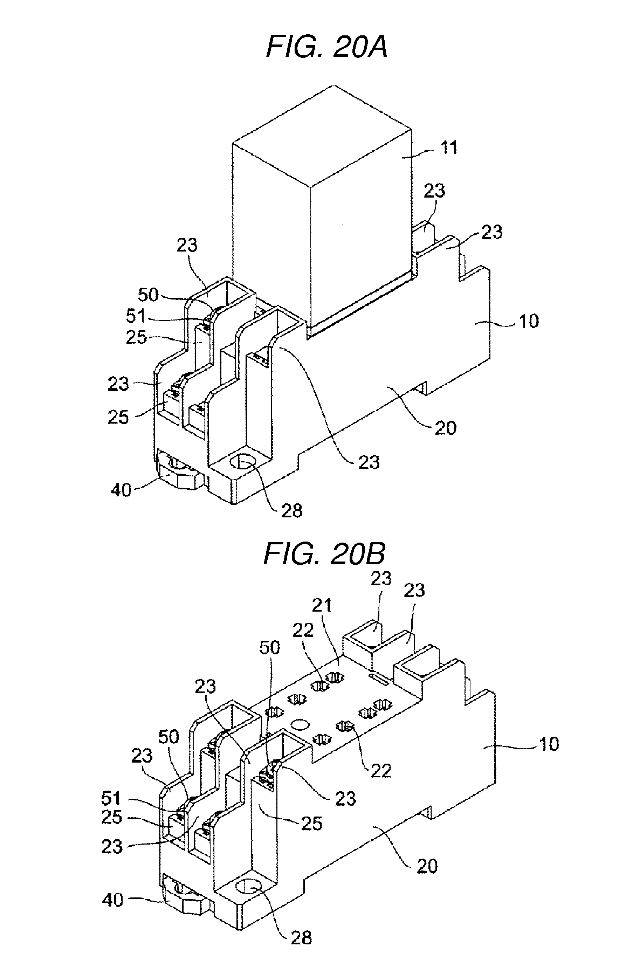

As illustrated in Figs. 20A to 21B, further, the lead wire connection structure may be applied to an 8-pin relay socket 10 provided with no finger protector (a fourth application example).

In the respective application examples described above, for convenience of the description, the same constituent components are denoted with the same reference signs, and the detailed description thereof will not be given here.

In the foregoing embodiments, the lead wire connection structure is applied to the relay socket; however, the disclosure is not limited to the relay socket. For example, the lead wire connection structure may be applied to a different electronic device.

## Claims

1. A lead wire connection structure comprising:
a terminal including
a terminal main body having a through hole, and
a connection part extending from one end of the terminal main body; and
a lead wire having one end connected to the connection part,
wherein
a pair of elastic holding parts extending from both opposite side edges of the terminal main body holds both side surfaces of a nut, and
an internal thread hole of the nut and the through hole are coaxially arranged.

2. The lead wire connection structure according to claim 1, wherein
the nut is formed into a quadrilateral shape as seen in a planar view.

3. The lead wire connection structure according to claim 2, wherein
the connection part is bent with respect to the terminal main body.

4. The lead wire connection structure according to any one of claims 1 to 3, wherein
the nut has engagement grooves formed on opposite side surfaces thereof, and
the elastic holding parts of the terminal are engaged with the engagement grooves.

5. The lead wire connection structure according to claim 4, wherein
the engagement grooves are formed to cut through the side surfaces of the nut.

6. The lead wire connection structure according to any one of claims 1 to 5, wherein
the elastic holding parts pinch the side surfaces of the nut to hold the nut.

7. The lead wire connection structure according to any one of claims 1 to 6, wherein
the nut has chamfered portions formed on at least a pair of edges of the opposite side surfaces thereof, the edges being opposite to each other with the internal thread hole interposed therebetween.

8. The lead wire connection structure according to any one of claims 1 to 7, wherein
the nut has an annular chamfered portion formed along an opening edge of the internal thread hole thereof, and
the terminal main body has a through hole having a diameter which is equal to or more than an outer peripheral diameter of the annular chamfered portion.

9. The lead wire connection structure according to any one of claims 1 to 8, wherein
the chamfered portions and the annular chamfered portion are symmetrically formed on top and bottom surfaces of the nut.

10. An electronic device comprising:
a cover;
a base; and
the lead wire connection structure according to any one of claims 1 to 9, wherein
the lead wire connection structure is housed and disposed in a space formed by the cover and the base.

11. The electronic device according to claim 10, wherein
the terminal and the nut are held by an inner surface of the cover and a support plate protruding from a top surface of the base.
